# EUROPÄISCHE PATENTSCHRIFT

(11) **EP 2 058 077 B1**
(45) Veröffentlichungstag und Bekanntmachung des Hinweises auf die Patenterteilung: **24.02.2010**
(21) Anmeldenummer: 07020245.2
(22) Anmeldetag: 16.10.2007
(51) Int. Cl.: B23K 1/00

(54) **Verfahren zum Verbinden einer Aluminiumrippe mit einem Stahlrohr und Wärmetauscher mit einer derart hergestellten Einheit**
Method for connecting the aluminium rib of a steel pipe and heat exchanger with such a manufactured unit
Procédé destiné à relier une arête en aluminium avec un tuyau en acier et échangeur thermique doté d'une telle unité

(43) Veröffentlichungstag der Anmeldung: 13.05.2009
(73) Patentinhaber: SPX-Cooling Technologies GmbH, 40882 Ratingen (DE)
(72) Erfinder: Podhorsky, Miroslav, Dr., 40882 Ratingen (DE); Holten, Wolfgang, 40629 Düsseldorf (DE); Leitz, Richard, 40721 Hilden (DE); Riley, Paul, Beverley, East Yorks HU17 7SG (GB)
(74) Vertreter: Lang, Friedrich

(56) Entgegenhaltungen:
- WO-A-01/54840
- GB-A- 2 311 745
- US-A1- 2004 149 811

## Beschreibung

Die Erfindung betrifft ein Verfahren zum Verbinden einer Aluminiumrippe mit einem Stahlrohr wie in US 2004/0149811 A1 beschrieben, und gemäß dem Oberbegriff des Anspruchs 1. Die Erfindung betrifft fernerhin einen Wärmetauscher, vorzugsweise einen Kondensator und insbesondere einen luftgekühlten Kondensator, für Industrieanlagen und insbesondere für Kraftwerke, der eine nach dem Verfahren hergestellte Einheit bzw. Baueinheit umfasst.

Wärmetauscher der betreffenden Art weisen, wie bspw. in der EP 1 553 379 A1 beschrieben, in der Regel ein Verteilerrohr auf (bevorzugte Ausführung als Einrohrsystem; ERS) dessen äußere Oberfläche zumindest teilweise mit Kühlrippen versehen ist. Der Wärmetausch (Energieaustauschprozess) vollzieht sich derart, dass ein durch das Verteilrohr strömendes und abzukühlendes erstes Medium (bzw. Fluidum) seine Wärme in die das Verteilrohr umgebenden Kühlrippen ableitet, die von einem zweiten Medium bzw. Fluidum, wie insbesondere Kühlluft oder Kühlgas, umströmt werden, wobei die Wärme an dieses zweite Medium abgegeben wird. Ein Wärmetausch ist selbsterklärend auch in umgekehrter Richtung möglich.

Befindet sich das abzukühlende erste Medium beim Eintritt in den Wärmetauscher in einem gasförmigen Zustand kann je nach Abkühlungsgradient eine Kondensation desselbigen erreicht werden. Daher werden derartige Wärmetauscher auch als Kondensatoren eingesetzt. In Kraftwerken dienen solche Kondensatoren der Kondensation des Abdampfes von Dampfturbinen. Zunehmende Wasserverknappung bzw. steigende Kosten für den Bezug und die Bereitstellung von Kühlwasser haben dazu geführt, dass gerade in Kraftwerken immer häufiger luftgekühlte Kondensatoren (Air Cooled Condesator; ACC) zum Einsatz gelangen. Es ist jedoch auch bekannt, solche Wärmetauscher in Industrieanlagen der Chemie- und Lebensmittelindustrie in Kühlvorrichtungen einzusetzen.

Bei dem Verteilrohr (im Folgenden nur Rohr) handelt es sich in der Regel um ein Stahlrohr. Dieses Stahlrohr ist üblicherweise mit einem gut wärmeleitenden Metall, wie insbesondere Aluminium, beschichtet ausgeführt. Die Kühlrippen selbst bestehen ebenso im Wesentlichen aus Aluminium. Dies bietet neben der bereits erwähnten guten Wärmeleitfähigkeit den weiteren Vorteil der Gewichtsersparnis, da die in der Regel recht groß ausfallenden luftgekühlten Wärmetauscher bzw. Kondensatoren ansonsten zu schwer geraten würden, was Nachteile für den Transport und die Montage mit sich brächte.

Die Verbindung zwischen Rohr und Aluminium-Kühlrippen erfolgt in einem Lötprozess. Hierzu wird das Rohr (in der Regel schon herstellerseitig) aluminiumplattiert und mit den Aluminiumrippen bei einer Löttemperatur von ca. 600° C verbunden. Hierbei muss das Rohr jedoch aufgewärmt und nach dem Lötvorgang wieder abgekühlt werden. Ein solches Verfahren hat daher einen hohen Energiebedarf bzw. Energieverbrauch. Problematisch sind ferner auch die unterschiedlichen Wärmeausdehnungskoeffizienten, die zu Verzugsspannungen führen können, was zu deren Verhinderung einer aufwändigen Prozessführung bedarf.

Aus der Patentschrift US 2004/0149811 A1 ist das Verbinden einer Aluminiumlamelle mit einem Stahlrohr bekannt. Aus der DE 100 57 180 A1und der zur selben Patentfamilie gehörenden WO 01/54840 A2 ist ein Verfahren zur Verbindung von Stahlrohren mit Aluminiumrippen bekannt. Hierbei wird zunächst auf die Oberflächen der Stahlröhre oder der Aluminiumrippen eine Schicht aus einer Zink-Aluminium-Legierung mit einem Aluminiumbestandteil von 0,5 % bis 20 % aufgebracht. Anschließend erfolgt das in Kontaktbringen der Komponenten und eine Verlötung im Ofen bei einer Temperatur zwischen 370° C und 470° C. Abkühlung erfolgt bei Raumtemperatur. Nachteilig hierbei ist bspw., dass dies zu Wärmetauschern mit schlechten Wirkungsgraden führt.

Aufgabe der Erfindung ist es, ein Verfahren zum Verbinden einer Aluminiumrippe mit einem Stahlrohr anzugeben, dass einen verhältnismäßig geringen Energiebedarf aufweist. Es ist fernerhin die Aufgabe der Erfindung einen Wärmetauscher (der eingangs genannten Art) mit hohem Wirkungsgrad anzugeben, für dessen Herstellung ein verhältnismäßig geringerer Energiebedarf erforderlich ist. Sowohl das Verfahren als auch der Wärmetauscher sollen zudem eine wirtschaftliche Aufrechterhaltung der Fertigung ermöglichen.

Diese Aufgabe wird gelöst durch ein Verfahren gemäß dem Anspruch 1, durch einen Wärmetauscher gemäß dem ersten nebengeordneten Anspruch und durch die angegebene Verwendung gemäß dem zweiten nebengeordneten Anspruch. Vorteilhafte Weiterbildungen und Ausgestaltungen sind Gegenstand der jeweils abhängigen Unteransprüche.

Das erfindungsgemäße Verfahren zum Verbinden einer Aluminiumrippe mit einem Stahlrohr umfasst wenigstens die Schritte:
- Bereitstellen wenigstens einer ersten Komponente in Form eines oberflächenbeschichteten Stahlrohres, wobei die Oberflächenbeschichtung einen Aluminiumanteil von größer 30 Gew.-% und bevorzugt von größer 40 Gew.-% aufweist, und der restliche Anteil im Wesentlichen Zink ist,
- Bereitstellen wenigstens einer zweiten Komponenten in Form einer Aluminiumrippe,
- in Kontakt bringen dieser Komponenten, und
- Erwärmen dieser Komponenten auf eine Temperatur zwischen 470° C und 590° C, bevorzugt auf eine Temperatur zwischen 550° C und 585° C, und anschließendes Halten bei dieser Temperatur (Lötbeharrungstemperatur) bzw. in diesem Temperaturbereich für eine vorgegebenen Zeitdauer, wobei es an der wenigstens einen Kontaktstelle der Komponenten zu einer dauerhaften Verbindung, genau genommen einer Lötverbindung, kommt, bei der das Material der Oberflächenbeschichtung der ersten Komponente als Verbindungsmaterial, genau genommen als Lotwerkstoff, dient.

Unter Aluminiumrippe wird im Sinne der Erfindung ein flächiges, aus Aluminium gebildetes Element verstanden, das zur Wärmeabgabe an ein vorbeiströmendes Medium fähig oder geeignet ist. Konkret kann es sich hierbei um eine Kühlrippe gängiger Bauart handeln.

Dem erfindungsgemäßen Verfahren liegt die Feststellung zugrunde, dass die Beharrungstemperatur, welche der Löttemperatur bzw. Lötbeharrungstemperatur entspricht, dann wesentlich abgesenkt werden kann, d.h. um mindestens circa 10 %, wenn die Oberflächenbeschichtung der ersten Komponente eine Schmelztemperatur aufweist, die unterhalb der bisher üblichen Löttemperatur von 600° C liegt. Damit ergibt sich auch eine vorteilhafte Vergrößerung des Temperaturabstands zur Erweichungstemperatur des Aluminiums.

Beim Erwärmen der miteinander in Kontakt gebrachten Komponenten beginnt dann die Oberflächebeschichtung bereits deutlich unterhalb der bisher üblichen Löttemperatur von 600° C zumindest teilweise zu schmelzen, wobei erfindungsgemäß vorgesehen ist, dass dann die angeschmolzene Oberflächenschichtung als Lotwerkstoff dient. Die bietet den Vorteil, dass auf eine separate Zuführung eines Lotwerkstoffs verzichtet werden kann. Wegen der geringern Löttemperatur kommt es zudem zu Energieverbrauchseinsparungen, was mit weniger Kosten (Wirtschaftlichkeitsaspekt) und einer geringeren Umweltbelastung einhergeht (der Energieverbrauch steht in direkter Korrelation zur Beharrungstemperatur). Darüber hinaus lässt sich auch eine verbesserte Maßhaltigkeit erzielen, da wegen den geringeren Temperaturen weniger Verzugsspannungen hervorgerufen werden. Als weiterer Vorteil hat sich zudem eine Verkürzung der eigentlichen Lötzeit bzw. der Haltezeit ergeben, wodurch die Ausbringung der Öfen (Lötöfen) erhöht werden kann.

Erfindungsgemäß soll die Oberflächenbeschichtung lediglich auf die erste Komponente (Rohr) und nicht auf die zweite Komponente (Aluminiumrippe) aufgebracht sein.

Der Bereich für die Löttemperatur bzw. die konkrete Löttemperatur richtet sich nach dem Oberflächenbeschichtungsmaterial für die erste Komponente. Ein hoher Aluminiumanteil im Beschichtungsmaterial bedingt zwar eine hohe Löttemperatur, führt dann jedoch auch zu einer bessere Wärmeleitung an den Kontaktstellen (geringerer Wärmeleitungswiderstand). Es ist daher für das erfindungsgemäße Verfahren vorgesehen, dass die Oberflächenbeschichtung für die erste Komponente einen Aluminiumanteil von mehr als 30 Gew.-% aufweist. Fernerhin ist bevorzugt vorgesehen, dass die zweite Komponente (Aluminiumrippe) aus einem Reinaluminium gebildet ist. Dies gewährleistet eine gute Wärmeleitung und einen hohen Wirkungsgrad für die Wärmeübertragung. Unter Reinaluminium wird im Sinne der Erfindung ein Aluminiumanteil von mindesten 99,5 Gew.-% verstanden.

Bei einer solchen bevorzugten Verfahrensausgestaltung treten die mit der Erfindung einhergehenden Vorteile besonders deutlich hervor. Bei reduziertem Energiebedarf (gegenüber dem Stand der Technik) wird eine besonders gute Wärmeleitung zwischen erster Komponente und zweiter Komponente erzielt, was einen hohen Wirkungsgrad für die Wärmeübertragung zwischen den Medien mit sich bringt.

Eine vorteilhafte Weiterbildung des Verfahrens sieht vor, dass zumindest im Bereich der Kontaktstellen ein Flussmittel aufgebracht wird. Bevorzugt handelt es sich um ein Flussmittel auf Cäsiumbasis und insbesondere um ein Flussmittel auf Cäsium-Aluminium-Fluorid-Basis (CaAlF). Das Flussmittel soll bei der Erwärmung für optimale Fließ- und Benetzungseigenschaften sorgen, indem es einerseits die Oxydation der Oberflächen der Fügepartner und des Lotes verhindert und andererseits die Oberflächenspannung des flüssigen Lotes bzw. der angeschmolzenen Oberflächenbeschichtung verringert. Bevorzugt wird das Flussmittel vor dem Erwärmen aufgebracht.

Eine andere Weiterbildung des Verfahrens sieht vor, dass die Komponenten nach dem Verbinden bzw. Fügen kontrolliert, d.h. nach Vorgabe einer Zeit-Temperatur-Kurve, abgekühlt werden. Hiermit lassen sich die bereits oben erwähnten Verzugsspannungen reduzieren, die zu Wärmeverzug führen und die Maßhaltigkeit der hergestellten Einheit bzw. Baueinheit nachteilig beeinträchtigen. Alternativ ist auch ein Auslagern und Abkühlen bei Raumtemperatur möglich, insbesondere dann, wenn die Löttemperatur verhältnismäßig gering ist.

Gemäß einer besonders bevorzugten Weiterbildung ist vorgesehen, dass die Beschichtung für die erste Komponente einen Aluminium-Anteil von 55 Gew.-%. aufweist und der restliche Anteil im wesentlichen Zink (Zn) ist. Die Löttemperatur (bzw. Erwärmungs- oder Lötbeharrungstemperatur) liegt in diesen Fällen zwischen 550° C und 585° C und beträgt insbesondere 575° C.

Gemäß einer anderen bevorzugten Weiterbildung ist die erste Komponente galvanisch verzinkt oder tauchverzinkt (schmelztauch-veredelt). In diesem Fall beträgt der Aluminiumanteil in etwa 4 bis 5 Gew.-%. Der Hauptbestandteil der Beschichtung ist dann durch Zink gebildet (neben geringen Mengen an Lanthan, Silizium und dgl.). In diesem Fall liegt die Löttemperatur im unteren Bereich der beanspruchten Temperaturskala, d.h. in etwa bei 470° C. Sehr gute Ergebnisse ließen sich auch bei 450° C erzielen.

Die Aufgabe wird fernerhin gelöst durch einen Wärmetauscher gemäß den Merkmalen des ersten nebengeordneten Anspruches.

Der erfindungsgemäße Wärmetauscher umfasst eine nach dem erfindungsgemäßen Verfahren hergestellte Einheit aus ersten und zweiten Komponenten. Die erste Komponente (Stahlrohr) ist hierbei als Flachrohr, vorzugsweise Stahlblech-Flachrohr, ausgebildet.

Insbesondere weist der erfindungsgemäße Wärmetauscher wenigstens eine erste Komponente aus einem Stahlwerkstoff in Form eines oberflächenbeschichteten Flachrohres auf, wobei die Oberflächenbeschichtung bevorzugt einen Aluminiumanteil von größer 30 Gew.-%, besonders bevorzugt von größer 40 Gew.-% und insbesondere einen Anteil von exakt 55 Gew.-% (zuzüglich eines üblichen Toleranzbereiches) aufweist. Fernerhin weist der erfindungsgemäße Wärmetauscher wenigstens eine zweite Komponente in Form einer Aluminiumrippe auf, wobei es sich bevorzugt um eine Aluminiumrippe aus einem Reinaluminium handelt. Die beiden Komponenten sind durch Verlötung an wenigstens einer Kontaktstelle stoffschlüssig dauerhaft miteinander verbunden, wobei als Verbindungs- bzw. Lotmaterial die Oberflächenbeschichtung der ersten Komponente dient.

In einer bevorzugten Weiterbildung ist die zweite Komponente (Aluminiumrippe) entlang eines Flach-Abschnitts des Flachrohrs mit diesem verbunden.

Gemäß einer anderen bevorzugten Weiterbildung ist vorgesehen, dass die zweite Komponente das Flachrohr zumindest abschnittsweise umfangsartig umschließt, vorzugsweise voll umschließt. Auf diese Weise ist zusätzlich zum Stoffschluss zwischen den Komponenten auch ein Formschluss gegeben, so dass die hergestellte Einheit bzw. Baueinheit trotz Leichtbau eine hohe mechanische Stabilität aufweist.

In einer ebenfalls bevorzugten Weiterbildung ist der Wärmetauscher ein Kondensator.

Gemäß dem zweiten nebengeordneten Anspruch wird die Aufgabe zudem gelöst durch die Verwendung einer nach dem erfindungsgemäßen Verfahren hergestellten Einheit für einen Wärmetauscher, vorzugsweise für einen luftgekühlten Wärmetauscher, besonders bevorzugt für einen luftgekühlten Kondensator, der insbesondere als Einrohrsystem ausgeführt ist, für den Einsatz in Kraftwerken. Gerade für eine solche Verwendung erweist sich die nach dem erfindungsgemäßen Verfahren hergestellte Einheit als besonders vorteilhaft. Auf diese Weise kann ein Wärmetauscher bereitgestellt werden, der einerseits einen hohen Wirkungsrad aufweist (als Folge der Aluminiumrippen und des hohen Aluminiumanteils im Verbindungsmaterial) und andererseits energiesparend und wirtschaftlich herstellbar ist.

## Patentansprüche

1. Verfahren zum Verbinden einer Aluminiumrippe mit einem Stahlrohr umfassend die folgenden Schritte:
- Bereitstellen wenigstens einer ersten Komponente in Form eines oberflächenbeschichteten Stahlrohres;
- Bereitstellen wenigstens einer zweiten Komponenten in Form einer Aluminiumrippe, die bevorzugt aus Reinaluminium besteht,
- in Kontakt bringen dieser Komponenten; und
- Erwärmen und anschließendes Halten dieser Komponenten in einem Temperaturbereich zwischen 470° C und 590° C, bevorzugt im Bereich zwischen 550° C und 585° C, wobei es an der wenigstens einen Kontaktstelle der Komponenten zu einer dauerhaften Verbindung kommt bei der das Material der Oberflächenbeschichtung der ersten Komponente als Verbindungsmaterial dient, **dadurch gekennzeichnet, dass** die Oberflächenbeschichtung des Stahlrohres einen Aluminiumanteil von größer 30 Gew.-%, und bevorzugt von größer 40 Gew.-% aufweist, und der restliche Anteil im wesentlichen Zink ist.

2. Verfahren nach Anspruch 1,
**dadurch gekennzeichnet,**
**dass** bevorzugt vor dem Erwärmen, ein Flussmittel zumindest im Bereich der Kontaktstellen aufgebracht wird, wobei es sich um ein Flussmittel auf Cäsiumbasis handelt und insbesondere um ein Flussmittel ein Cäsium-Aluminium-Fluorid-Basis.

3. Verfahren nach Anspruch 1 oder 2,
**dadurch gekennzeichnet,**
**dass** die durch das Fügen der Komponenten gebildete Einheit nach dem Fügen kontrolliert abgekühlt wird.

4. Verfahren nach einem der vorausgehenden Ansprüche,
**dadurch gekennzeichnet,**
**dass** die Oberflächenbeschichtung für die erste Komponente einen Aluminiumanteil von 55 Gew.-%. aufweist und der restliche Anteil im wesentlichen Zink ist.

5. Verfahren nach Anspruch 4,
**dadurch gekennzeichnet,**
**dass** die Erwärmungstemperatur zum Verbinden 575° C beträgt.

6. Wärmetauscher mit einer Einheit hergestellt nach einem Verfahren gemäß einem der vorausgehenden Ansprüche,
**dadurch gekennzeichnet,**
**dass** die erste Komponente ein Flachrohr ist.

7. Wärmetauscher nach Anspruch 6,
**dadurch gekennzeichnet,**
**dass** die zweite Komponente entlang eines Flach-Abschnitts des Flachrohrs mit diesem verbunden ist.

8. Wärmetauscher nach Anspruch 6,
**dadurch gekennzeichnet,**
**dass** die zweite Komponente das Flachrohr zumindest abschnittsweise umfangsartig umschließt, vorzugsweise voll umschließt.

9. Wärmetauscher nach einem der Ansprüche 6 bis 8,
**dadurch gekennzeichnet,**
**dass** dieser ein Kondensator ist.

10. Verwendung einer nach den Schritten gemäß einem der Ansprüche 1 bis 5 hergestellten Einheit für einen Wärmetauscher, vorzugsweise für einen luftgekühlten Wärmetauscher, besonders bevorzugt für einen luftgekühlten Kondensator, der insbesondere als Einrohrsystem ausgeführt ist, für den Einsatz in Kraftwerken.

## Claims

1. A method for bonding an aluminum rib to a steel pipe comprising the following steps:
- providing at least one first component in the form of a surface-coated steel pipe,
- providing at least one second component in the form of an aluminum rib, which preferably comprises pure aluminum,
- bringing these components into contact,
- heating and subsequently holding these components in a temperature range between 470°C and 590°C, preferably in the range between 550°C and 585°C, wherein a permanent bond occurring on at least one contact point of the components, in which the material of the surface coating of the first component is used as a bonding material,
**characterized in that** the surface coating of the steel pipe preferably having an aluminum proportion of greater than 30 wt.-%, and preferably greater than 40 wt.%, and the remaining proportion essentially consisting of zinc.

2. The method according to Claim 1,
**characterized in that**, preferably before the heating, a flux is applied at least in the area of the contact points, this being a flux based on cesium and in particular a flux based on cesium-aluminum-fluoride.

3. The method according to Claim 1 or 2,
**characterized in that** the unit formed by the joining of the components is cooled down in a controlled manner after the joining.

4. The method according to one of the preceding claims,
**characterized in that** the coating for the first component has an aluminum proportion of 55 wt.-%, and the remaining proportion is essentially zinc.

5. The method according to Claim 4,
**characterized in that** the heating temperature for bonding is 575°C.

6. A heat exchanger having a unit produced according to a method according to one of the preceding claims,
**characterized in that** the first component is a flat pipe.

7. The heat exchanger according to Claim 6,
**characterized in that** the second component is connected to the flat pipe along a flat section thereof.

8. The heat exchanger according to Claim 6,
**characterized in that** the second component at least sectionally encloses, preferably completely encloses the flat pipe around its circumference.

9. The heat exchanger according to one of Claims 6 through 8,
**characterized in that** it is a condenser.

10. A use of a unit produced according to the steps according to one of Claims 1 through 5 for a heat exchanger, preferably for an air-cooled heat exchanger, especially preferably for an air-cooled condenser, which is implemented in particular as a single pipe system, for the use in power plants.

## Revendications

1. Procédé pour l'assemblage d'une ailette en aluminium sur un tube d'acier, comprenant les étapes suivantes :
- préparation d'au moins un premier composant prenant la forme d'un tube d'acier muni d'un revêtement de surface ;
- préparation d'au moins un deuxième composant prenant la forme d'une ailette en aluminium, qui se compose de préférence d'aluminium pur ;
- mise en contact de ces composants ; et
- chauffage puis maintien de ces composants dans une plage de température comprise entre 470°C et 590°C, de préférence dans une plage comprise entre 550°C et 585°C, de sorte qu'il se forme au niveau de l'au moins un point de contact des composants une liaison permanente dans laquelle le matériau du revêtement de surface du premier composant sert de matériau de liaison,
**caractérisé en ce que** le revêtement de surface du tube d'acier contient une proportion d'aluminium supérieure à 30 % en poids et de préférence supérieure à 40 % en poids, et le reste est pour l'essentiel du zinc.

2. Procédé selon la revendication 1, **caractérisé en ce qu'**un agent de flux est de préférence appliqué avant le chauffage au moins au niveau des points de contact, l'agent de flux étant de préférence à base de césium et en particulier à base de fluorure de césium et d'aluminium.

3. Procédé selon la revendication 1 ou 2, **caractérisé en ce que** l'unité formée par l'assemblage des composants est refroidie de façon contrôlée après l'assemblage.

4. Procédé selon l'une des revendications précédentes, **caractérisé en ce que** le revêtement de surface du premier composant contient une proportion d'aluminium de 55 % en poids et le reste est pour l'essentiel du zinc.

5. Procédé selon la revendication 4, **caractérisé en ce que** la température de chauffage pour la liaison est de 575°C.

6. Échangeur de chaleur muni d'une unité fabriquée par un procédé selon l'une des revendications précédentes, **caractérisé en ce que** le premier composant est un tube plat.

7. Échangeur de chaleur selon la revendication 6, **caractérisé en ce que** le deuxième composant est relié au tube plat le long d'une partie plate de celui-ci.

8. Échangeur de chaleur selon la revendication 6, **caractérisé en ce que** le deuxième composant entoure au moins partiellement le tube plat sur sa circonférence, et de préférence l'entoure complètement.

9. Échangeur de chaleur selon la revendication 6 à 8, **caractérisé en ce qu'**il s'agit d'un condenseur.

10. Utilisation d'une unité fabriquée par les étapes selon l'une des revendications 1 à 5 pour un échangeur de chaleur, de préférence pour un échangeur de chaleur refroidi par air, en particulier pour un condenseur refroidi par air, qui est conçu en particulier comme un système monotube, destiné à être utilisé dans des centrales de production d'énergie.
